Europäisches Patentamt

European Patent Office

Office européen des brevets

(19)

(11) **EP 1 100 612 B1**

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(21) Anmeldenummer: **99948688.9**

(22) Anmeldetag: **26.07.1999**

(51) Int Cl.⁷: **B01D 53/86**, B01D 53/94, B01D 53/56

(86) Internationale Anmeldenummer:
**PCT/DE99/02286**

(87) Internationale Veröffentlichungsnummer:
**WO 00/007699 (17.02.2000 Gazette 2000/07)**

(54) **VERFAHREN UND EINRICHTUNG ZUM BESEITIGEN VON STICKOXIDEN AUS EINEM ABGAS**

METHOD AND DEVICE FOR REMOVING NITROGEN OXIDES FROM EXHAUST GASES

PROCEDE ET DISPOSITIF POUR ELIMINER LES OXYDES D'AZOTE DE GAZ D'ECHAPPEMENT

(84) Benannte Vertragsstaaten:
**AT BE CH CY DE DK ES FI FR GB GR IE IT LI LU MC NL PT SE**

(30) Priorität: **03.08.1998 DE 19834993**

(43) Veröffentlichungstag der Anmeldung:
**23.05.2001 Patentblatt 2001/21**

(73) Patentinhaber: **SIEMENS AKTIENGESELLSCHAFT**
**80333 München (DE)**

(72) Erfinder: **NEUFERT, Ronald**
**D-96247 Michelau (DE)**

(74) Vertreter: **Tergau & Pohl Patentanwälte**
**Mögeldorfer Hauptstrasse 51**
**90482 Nürnberg (DE)**

(56) Entgegenhaltungen:
**WO-A-90/08845** **DE-A- 3 010 330**
**GB-A- 1 402 455**

• **DATABASE WPI Section Ch, Week 197724 Derwent Publications Ltd., London, GB; Class E36, AN 1977-42393Y XP002131551 & JP 52 054669 A (MITSUBISHI HEAVY IND CO LTD), 4. Mai 1977 (1977-05-04)**

**Beschreibung**

Die Erfindung bezieht sich auf ein Verfahren zum Beseitigen von Stickoxiden aus einem Abgas. Sie bezieht sich weiter auf eine Einrichtung zum Beseitigen von Stickoxiden aus einem Abgas.

Bei Abgasen aus Verbrennungsanlagen, z.B. aus Kraftwerken oder Verbrennungsmotoren, geht es darum, die enthaltenen Stickoxide ($NO_x$) zu verringern. Zu diesem Zweck der Stickoxidminderung werden heute überwiegend Stickoxid-Reduktions-Katalysatoren nach dem SCR-Verfahren mit stickstoffhaltigen Reduktionsmitteln eingesetzt. Als Reduktionsmittel kommen hier Ammoniak ($NH_3$) oder Harnstoff in Betracht. In Einrichtungen zur Stickoxidminderung wird das Reduktionmittel in das Abgas eingedüst. Zur Vermeidung von Reduktionsmittelschlupf, speziell bei Ammoniak, welches geruchsintensiv und umweltschädlich ist, ist eine aufwendige Dosiermengensteuerung oder -regelung erforderlich, die kostenintensiv ist.

Aufgabe der vorliegenden Erfindung ist es, ein Verfahren und eine Einrichtung der eingangs genannten Art anzugeben, bei denen ein Reduktionsmittelschlupf ausgeschlossen ist.

Bezüglich des Verfahrens wird diese Aufgabe erfindungsgemäß gelöst durch die folgenden Schritte in der angegebenen Reihenfolge:

> a) das Abgas wird einer katalytischen Oxidation unterzogen,
> b) das Abgas wird danach mit Wasser und Sauerstoff in Kontakt gebracht, wodurch sich ein von Stickoxiden gereinigtes Abgas und eine wäßrige Lösung ergeben,
> c) die wäßrige Lösung wird in einem sauren wäßrigen Medium

>> c1) unter reduzierenden Bedingungen oder
>> c2) unter reduzierenden Elektrolysebedingungen mit einem stickstoffhaltigen Reduktionsmittel zur Reaktion gebracht, wobei eine Reaktionslösung und ein Gas entstehen, und

> d) das Gas wird abgeführt.

Offensichtlich ist bei diesem Verfahren ein Reduktionsmittelschlupf ausgeschlossen. Das Verfahren ist selbstregelnd, und es benötigt keine Reduktionsmittel-Dosiermengensteuerung oder - regelung.

Gemäß einer vorteilhaften Weiterbildung wird das Abgas dadurch mit Wasser und Sauerstoff in Kontakt gebracht, daß das Abgas durch das Wasser unter Einblasen von Luft hindurchgeleitet wird. Hierzu dient eine Mischeinrichtung, wie insbesondere ein Gaswäscher, dem Wasser und Luft zugeleitet werden.

Als saures wäßriges Medium wird vorliegend eine Säure verwendet, die in Abhängigkeit vom pH-Wert der Reaktionslösung nachgespeist wird. Dabei kann die Säure einem Vorratsbehälter, beispielsweise bei einem Fahrzeug der ohnehin vorhandenen Fahrzeugbatterie, entnommen werden.

Als stickstoffhaltiges Reduktionsmittel wird hier bevorzugt Harnstoff eingesetzt.

Die reduzierenden Bedingungen lassen sich durch Beigabe eines unedlen Metalls, beispielsweise von Zink, schaffen. Die reduzierenden Elektrolysebedingungen können mit Hilfe einer Elektrolyseeinrichtung durch elektrochemische kathodische Reduktion geschaffen werden.

Weitere vorteilhafte Ausgestaltungen des Verfahrens sind in den Unteransprüchen gekennzeichnet.

Die genannte Aufgabe wird bezüglich der Einrichtung erfindungsgemäß gelöst durch

> a) einen Oxidationskatalysator, dem das Abgas zuleitbar ist,
> b) eine nachgeschaltete Mischeinrichtung, insbesondere einen Gaswäscher, in der/dem das Abgas mit Wasser und Sauerstoff in Kontakt bringbar ist,
> c) einen Reaktionsbehälter und
> d) eine Verbindungsleitung, über die eine in der Mischeinrichtung enthaltene wäßrige Lösung dem Reaktionsbehälter zuführbar ist, dem ein saures wäßriges Medium und ein stickoxidhaltiges Reduktionsmittel zuleitbar sind und der

>> d1) unter reduzierende Bedingungen oder
>> d2) unter reduzierende Elektrolysebedingungen bringbar ist.

Weitere vorteilhafte Ausgestaltungen der Einrichtung sind in den Unteransprüchen gekennzeichnet.

Ausführungsbeispiele der Erfindung werden im folgenden anhand einer schematischen Figur näher erläutert.

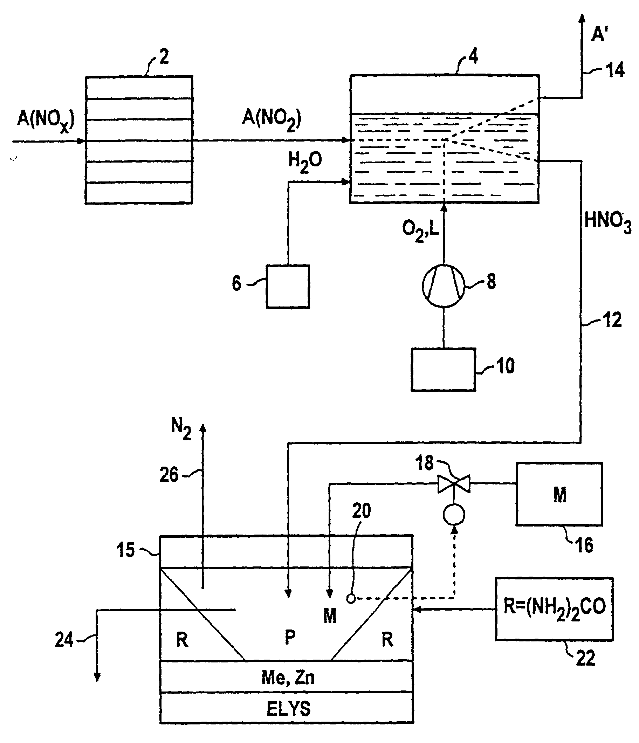

In der Figur ist eine Einrichtung zum Beseitigen von Stickoxiden $NO_x$ aus einem Abgas A dargestellt. Das mit den Stickoxiden $NO_x$ belastete Abgas A wird einem Oxidationskatalysator 2 zugeführt. Hierbei kann es sich um einen Edelmetall-Katalysator handeln; dieser besitzt z.B. eine Schicht aus Platin oder Palladium auf einem Substrat von Aluminiumoxid ($Al_2O_3$) oder Titanoxid ($TiO_2$). In diesem Oxidationskatalysator 2 wird das $NO_x$ quantitativ zu $NO_2$ oxidiert. Das Abgas A wird nunmehr einer Mischeinrichtung 4 zugeführt. Hierbei kann es sich beispielsweise um einen Gaswäscher oder eine ähnliche Einrichtung handeln. Das mit $NO_2$ belastete Abgas A wird hier unter Einblasen von Luft L oder Sauerstoff $O_2$ durch Wasser $H_2O$ geleitet. Die Mischeinrichtung 4 ist zum Nachfüllen des Wassers an einen Wasservorrat 6 angeschlossen. Mittels eines Gebläses 8 wird der Mischeinrichtung 4 von einer Sauerstoffquelle 10 Sauerstoff $O_2$, speziell in Form von Luft L, zugeführt. In dieser Mischeinrichtung 4 wird das $NO_2$, gegebenenfalls unter unterstützendem Einsatz eines (nicht gezeigten) Katalysators, zu Salpetersäure nach der Reaktion

$$4NO_2 + 2H_2O + O_2 \rightarrow 4HNO_3$$

umgesetzt. Ohne Einblasen von Luft L entsteht ein Gemisch aus salpetriger Säure und Salpetersäure. Die Salpetersäure ($HNO_3$ in wäßriger Lösung) wird über eine Verbindungsleitung 12 abgezogen. Das vom Stickoxid $NO_2$ gereinigte Abgas A' wird über eine Abführleitung 14 abgeleitet.

Das $HNO_3$ in wäßriger Lösung wird über die Verbindungsleitung 12 einem Reaktionsbehälter 15 zugeleitet. Hier geschieht eine Umsetzung in einem sauren Medium M mit einem stickstoffhaltigen Reduktionsmittel R, vorzugsweise Harnstoff $(NH_2)_2CO$, unter reduzierenden Bedingungen, z.B. mittels eines unedlen Metalls Me, wie Zink Zn, oder unter reduzierenden Elektrolysebedingungen (kathodische Reduktion), was durch ELYS gekennzeichnet ist. Dabei wird aus Nitrat $NO_3$ quantitativ mit dem Harnstoff elementarer Stickstoff $N_2$ gebildet nach der Kurzformel

$$NO_3^- + (NH_2)_2CO \rightarrow N_2 + H_2O.$$

Aus Nitrit $NO_2^-$ wird mit Harnstoff auch ohne reduzierende Bedingungen in saurem Medium M Stickstoff $N_2$ gebildet.

Das saure Medium M, insbesondere eine Säure wie Schwefelsäure, die bei einem Kraftfahrzeug der Fahrzeugbatterie entnommen werden kann, wird bedarfsgerecht von einem Vorratsbehälter 16 abgerufen. Die gesteuerte Zufuhr der Säure geschieht über ein Steuerventil 18, das von einem pH-Wert-Sensor 20 angesteuert wird. Dieser pH-Wert-Sensor 20 besorgt eine Messung des pH-Werts der Reaktionslösung P, z.B. mittels einer Glaselektrode. Wenn die Reaktionslösung P den sauren Bereich verläßt, wird über das Ventil 18 Säure aus dem Vorratsbehälter 16 nachgeführt.

Für das stickstoffhaltige Reduktionsmittel R, also beispielsweise Harnstoff $(NH_2)_2CO$, ist eine Nachfülleinrichtung 22 vorgesehen, die mit dem Reaktionsbehälter 15 verbunden ist.

Das Reduktionsmittel R kann in fester oder gelöster Form in den Reaktionsbehälter 15 im Überschuß eingebracht werden. Dies liegt daran, daß nur jeweils so viel verbraucht wird, wie an Nitrat-/Nitrit-Ionen im Reaktionsbehälter 15 vorhanden ist. Im Idealfall kann die Menge so bemessen werden, gegebenenfalls durch automatisches Nachfüllen aus der Nachfülleinrichtung 22 oder aus einer Vorratspatrone, daß ein Auffüllen des Vorrats im Rahmen eines Regelservice erfolgen kann. Ein solcher Regelservice kann in einer regelmäßigen Revision, bei einem vorbestimmten Werkstattaufenthalt, beim Besuch eines Kaminkehrers etc. erfolgen.

Mittels einer Abführleitung 24 können Wasser und weitere Substanzen der Reaktionslösung P dem Reaktionsbehälter 15 entnommen werden. Und mittels einer Abführleitung 26 kann Stickstoff $N_2$ entnommen

werden.

Es soll noch einmal festgehalten werden, daß bei dem Ausführungsbeispiel der Figur ein selbstregelndes Verfahren stattfindet, bei der eine Steuerung der Dosiermenge des Reduktionsmittels R nicht erforderlich ist. Bei der Stickoxid-Beseitigung kann daher auch kein Schlupf des Reduktionsmitels R auftreten.

**Patentansprüche**

1. Verfahren zum Beseitigen von Stickoxiden ($NO_x$) aus einem Abgas (A), mit folgenden Schritten in der angegebenen Reihenfolge:

   a) das Abgas (A) wird einer katalytischen Oxidation unterzogen,
   b) das Abgas (A) wird danach mit Wasser ($H_2O$) und Sauerstoff ($O_2$) in Kontakt gebracht, wodurch sich ein von Stickoxiden ($No_x$) gereinigtes Abgas (A') und eine wäßrige Salpetersäure-Lösung ($HNO_3$) ergeben,
   c) die wäßrige Lösung ($HNO_3$) wird in einem sauren wäßrigen Medium (M)

   c1) unter reduzierenden Bedingungen (Me, Zn) oder
   c2) unter reduzierenden Elektrolysebedingungen (ELYS)

   mit einem stickstoffhaltigen Reduktionsmittel (R) zur Reaktion gebracht, wobei eine Reaktionslösung (P) und ein Stickstoff-Gas ($N_2$) entstehen, und
   d) das Gas ($N_2$) wird abgeführt.

2. Verfahren nach Anspruch 1,
   **dadurch gekennzeichnet, daß** bei der katalytischen Oxidation das Abgas (A) durch einen Oxidationskatalysator (2) geleitet wird.

3. Verfahren nach Anspruch 1,
   **dadurch gekennzeichnet, daß** der Oxidationskatalysator (2) Platin oder Palladium auf einem Substrat aus Aluminiumoxid ($Al_2O_3$) oder Titanoxid ($TiO_2$) umfaßt.

4. Verfahren nach einem der Ansprüche 1 bis 3,
   **dadurch gekennzeichnet, daß** das Abgas (A) dadurch mit Wasser ($H_2O$) und Sauerstoff ($O_2$) in Kontakt gebracht wird, daß es durch das Wasser ($H_2O$) unter Einblasen von Luft (L) hindurchgeleitet wird.

5. Verfahren nach Anspruch 4,
   **dadurch gekennzeichnet, daß** das Abgas (A) durch einen Gaswäscher (4) geleitet wird, dem Wasser ($H_2O$) und Luft (L) zuleitbar sind.

**6.** Verfahren nach einem der Ansprüche 1 bis 5, **dadurch gekennzeichnet, daß** das Abgas (A) nach der Kontaktierung mit Wasser (H$_2$O) und Sauerstoff (O$_2$) abgeleitet wird.

**7.** Verfahren nach einem der Ansprüche 1 bis 6, **dadurch gekennzeichnet, daß** das saure wäßrige Medium (M) eine Säure ist, die in Abhängigkeit vom pH-Wert der Reaktionslösung (P) nachspeisbar ist.

**8.** Verfahren nach Anspruch 7, **dadurch gekennzeichnet, daß** die Säure einem Vorratsbehälter (16), beispielsweise einer ohnehin vorhandenen Fahrzeugbatterie, entnommen wird.

**9.** Verfahren nach einem der Ansprüche 1 bis 8, **dadurch gekennzeichnet, daß** als stickstoffhaltiges Reduktionsmittel (R) Harnstoff vorgesehen ist.

**10.** Verfahren nach einem der Ansprüche 1 bis 9, **dadurch gekennzeichnet, daß** die reduzierenden Bedingungen durch Beigabe eines unedlen Metalls (Me), insbesondere von Zink (Zn), geschaffen werden.

**11.** Verfahren nach einem der Ansprüche 1 bis 9, **dadurch gekennzeichnet, daß** die reduzierenden Elektrolysebedingungen (ELYS) durch elektrochemische kathodische Reduktion mit Hilfe einer Elektrolyseeinrichtung geschaffen werden.

**12.** Verfahren nach einem der Ansprüche 1 bis 11, **dadurch gekennzeichnet, daß** die wäßrige Lösung (HNO$_3$) einem Reaktionsbehälter (15) zugeführt wird, dem aus einer Nachfülleinrichtung (22) das stickstoffhaltige Reduktionsmittel (R) in fester oder gelöster Form zugeleitet wird.

**13.** Verfahren nach einem der Ansprüche 1 bis 11, **dadurch gekennzeichnet, daß** das stickstoffhaltige Reduktionsmittel (R) im Überschuß in die wäßrige Lösung (HNO$_3$) eingebracht wird.

**14.** Verfahren nach Anspruch 12, **dadurch gekennzeichnet, daß** die Nachfülleinrichtung (22) in regelmäßigen oder vorgegebenen Zeitabständen mit dem Reduktionsmittel (R) aufgefüllt wird.

**15.** Einrichtung zum Beseitigen von Stickoxiden (NO$_x$) aus einem Abgas (A), umfassend

a) einen Oxidationskatalysator (2), dem das Abgas (A) zuleitbar ist,
b) eine nachgeschaltete Mischeinrichtung (4), insbesondere einen Gaswäscher, in der/dem das Abgas (A) mit Wasser (H$_2$O) und Sauerstoff (O$_2$) in Kontakt bringbar ist,

c) einen Reaktionsbehälter (15) und
d) eine Verbindungsleitung (12), über die eine in der Mischeinrichtung (4) entstehende wäßrige Lösung (HNO$_3$) dem Reaktionsbehälter (15) zuführbar ist, dem ein saures wäßriges Medium (M) und ein stickoxidhaltiges Reduktionsmittel (R) zuleitbar sind und der

d1) unter reduzierende Bedingungen (Me, Zn) oder
d2) unter reduzierende Elektrolysebedingungen (ELYS) bringbar ist.

**16.** Einrichtung nach Anspruch 15, **dadurch gekennzeichnet, daß** der Oxidationskatalysator (2) Platin oder Palladium auf einem Substrat aus Aluminiumoxid (Al$_2$O$_3$) oder Titanoxid (TiO$_2$) umfaßt.

**17.** Einrichtung nach Anspruch 15 oder 16, **dadurch gekennzeichnet, daß** die Mischeinrichtung (4) an einen Wasservorrat (6) und an eine Sauerstoffquelle (10) angeschlossen ist.

**18.** Einrichtung nach Anspruch 15, 16 oder 17, **dadurch gekennzeichnet, daß** die Mischeinrichtung (4) eine Abführleitung (14) für gereinigtes Abgas (A') umfaßt.

**19.** Einrichtung nach einem der Ansprüche 15 bis 18, **dadurch gekennzeichnet, daß** der Reaktionsbehälter (15) an einen Vorratsbehälter (16) für Säure, beispielsweise an eine ohnehin vorhandene Fahrzeugbatterie, angeschlossen ist.

**20.** Einrichtung nach einem der Ansprüche 15 bis 19, **dadurch gekennzeichnet, daß** der Reaktionsbehälter (15) an eine Nachfülleinrichtung (22) für das stickstoffhaltige Reduktionsmittel (R) in fester oder gelöster Form, insbesondere für Harnstoff ((NH$_2$)$_2$CO), angeschlossen ist.

**21.** Einrichtung nach einem der Ansprüche 19 oder 20, **dadurch gekennzeichnet, daß** der Ausfluß des Vorratsbehälters (16) für Säure in Abhängigkeit von einem pH-Wert-Sensor (20) steuerbar ist, der zur Messung des pH-Werts der Reaktionslösung (P) im Reaktionsbehälter (15) vorgesehen ist.

**Claims**

**1.** Method for the elimination of nitrogen oxides (NO$_x$) from an exhaust gas (A), with the following steps in the specified order:

a) the exhaust gas (A) is subjected to catalytic oxidation,

b) the exhaust gas (A) is subsequently brought into contact with water ($H_2O$) and oxygen ($O_2$), thus resulting in an exhaust gas (A') freed of nitrogen oxides ($NO_x$) and in an aqueous nitric acid solution ($HNO_3$),

c) the aqueous solution ($HNO_3$) is reacted with a nitrogen-containing reducing agent (R) in an acidic aqueous medium (M)

> c1) under reducing conditions (Me, Zn) or
> c2) under reducing electrolysis conditions (ELYS),

> a reaction solution (P) and a nitrogen gas ($N_2$) being obtained, and
> d) the gas ($N_2$) is discharged.

2. Method according to Claim 1, **characterized in that**, during catalytic oxidation, the exhaust gas (A) is led through an oxidizing catalyst (2).

3. Method according to Claim 1, **characterized in that** the oxidizing catalyst (2) comprises platinum or palladium on a substrate of aluminium oxide ($Al_2O_3$) or titanium oxide ($TiO_2$).

4. Method according to one of Claims 1 to 3, **characterized in that** the exhaust gas (A) is brought into contact with water ($H_2O$) and oxygen ($O_2$) by being led through the water ($H_2O$), with air (L) being injected at the same time.

5. Method according to Claim 4, **characterized in that** the exhaust gas (A) is led through a gas scrubber (4), to which water ($H_2O$) and air (L) can be delivered.

6. Method according to one of Claims 1 to 5, **characterized in that** the exhaust gas (A) is discharged after being brought into contact with water ($H_2O$) and oxygen ($O_2$).

7. Method according to one of Claims 1 to 6, **characterized in that** the acidic aqueous medium (M) is an acid which can be fed to the reaction solution (P) as a function of the pH value.

8. Method according to Claim 7, **characterized in that** the acid is extracted from a reservoir (16), for example a vehicle battery which is present in any case.

9. Method according to one of Claims 1 to 8, **characterized in that** the nitrogen-containing reducing agent (R) provided is urea.

10. Method according to one of Claims 1 to 9, **characterized in that** the reducing conditions are afforded by the addition of a base metal (Me), in particular of zinc (Zn).

11. Method according to one of Claims 1 to 9, **characterized in that** the reducing electrolysis conditions (ELYS) are afforded by electrochemical cathodic reduction with the aid of an electrolysis device.

12. Method according to one of Claims 1 to 11, **characterized in that** the aqueous solution ($HNO_3$) is supplied to a reaction vessel (15), to which the nitrogen-containing reducing agent (R) is delivered in solid or dissolved form from a refilling device (22).

13. Method according to one of Claims 1 to 11, **characterized in that** the nitrogen-containing reducing agent (R) is introduced in excess into the aqueous solution ($HNO_3$).

14. Method according to Claim 12, **characterized in that** the refilling device (22) is filled up with the reducing agent (R) at regular or predetermined time intervals.

15. Device for the elimination of nitrogen oxides ($NO_x$) from an exhaust gas (A), comprising

> a) an oxidizing catalyst (2), to which the exhaust gas (A) can be delivered,
> b) a downstream mixing device (4), in particular a gas scrubber, in which the exhaust gas (A) can be brought into contact with water ($H_2O$) and oxygen ($O_2$),
> c) a reaction vessel (15), and
> d) a connecting line (12), via which an aqueous solution ($HNO_3$) occurring in the mixing device (4) can be supplied to the reaction vessel (15), to which an acidic aqueous medium (M) and a reducing agent (R) containing nitrogen oxide can be delivered and which can be brought

> > d1) under reducing conditions (Me, Zn) or
> > d2) under reducing electrolysis conditions (ELYS).

16. Device according to Claim 15, **characterized in that** the oxidizing catalyst (2) comprises platinum or palladium on a substrate of aluminium oxide ($Al_2O_3$) or titanium oxide ($TiO_2$).

17. Device according to Claim 15 or 16, **characterized in that** the mixing device (4) is connected to a water supply (6) and to an oxygen source (10).

18. Device according to Claim 15, 16 or 17, **characterized in that** the mixing device (4) comprises a discharge line (14) for purified exhaust gas (A').

**19.** Device according to one of Claims 15 to 18, **characterized in that** the reaction vessel (15) is connected to a reservoir (16) for acid, for example to a vehicle battery which is present in any case.

**20.** Device according to one of Claims 15 to 19, **characterized in that** the reaction vessel (15) is connected to a refilling device (22) for the nitrogen-containing reducing agent (R) in solid or dissolved form, in particular for urea ($(NH_2)_2CO$).

**21.** Device according to one of Claims 19 and 20, **characterized in that** the outflow from the reservoir (16) for acid can be controlled as a function of a pH-value sensor (20) which is provided for measuring the pH value of the reaction solution (P) in the reaction vessel (15).

**Revendications**

**1.** Procédé d'élimination d'oxydes d'azote ($NO_x$) de gaz d'échappement (A), comprenant les stades suivants dans l'ordre de succession indiqué :

a) on soumet les gaz d'échappement (A) à une oxydation catalytique,
b) on met ensuite les gaz d'échappement (A) en contact avec de l'eau ($H_2O$) et de l'oxygène ($O_2$) en obtenant ainsi des gaz d'échappement (A') épurés des oxydes d'azote ($NO_x$) et une solution aqueuse d'acide nitrique ($HNO_3$),
c) on met la solution ($HNO_3$) aqueuse à réagir dans un milieu (M) aqueux acide

c1) dans des conditions réductrices (Me, Zn) ou
c2) dans des conditions d'électrolyse (ELYS) réductrices

sur un agent (R) réducteur azoté en formant une solution (P) de réaction et de l'azote gazeux ($N_2$) et
d) on évacue le gaz ($N_2$).

**2.** Procédé suivant la revendication 1, **caractérisé en ce que** dans l'oxydation catalytique on envoie les gaz d'échappement (A) dans un pot catalytique (2) d'oxydation.

**3.** Procédé suivant la revendication 1, **caractérisé en ce que** le pot catalytique (2) d'oxydation comprend du platine ou du palladium sur un substrat en oxyde d'aluminium ($Al_2O_3$) ou en oxyde de titane ($TiO_2$).

**4.** Procédé suivant l'une des revendications 1 à 3, **caractérisé en ce que** l'on met les gaz d'échappement (A) en contact avec de l'eau ($H_2O$) et de l'oxygène ($O_2$) en les faisant passer à travers de l'eau ($H_2O$) avec insufflation d'air (L).

**5.** Procédé suivant la revendication 4, **caractérisé en ce que** l'on envoie les gaz d'échappement (A) dans un laveur (4) à gaz auquel on envoie de l'eau ($H_2O$) et de l'air (L).

**6.** Procédé suivant l'une des revendications 1 à 5, **caractérisé en ce que** l'on évacue les gaz d'échappement (A) après le contact avec de l'eau ($H_2O$) et de l'oxygène ($O_2$).

**7.** Procédé suivant l'une des revendications 1 à 6, **caractérisé en ce que** le milieu (M) aqueux acide est un acide qui peut être ajouté ensuite à la solution (P) de réaction en fonction du pH.

**8.** Procédé suivant la revendication 7, **caractérisé en ce que** l'on prélève l'acide d'un réservoir (16), par exemple d'un accumulateur de véhicule automobile qui est présent de toutes façons.

**9.** Procédé suivant l'une des revendications 1 à 8, **caractérisé en ce que** l'on prévoit de l'urée comme agent (R) réducteur azoté.

**10.** Procédé suivant l'une des revendications 1 à 9, **caractérisé en ce que** l'on ménage les conditions réductrices par addition d'un métal (Me) non précieux, notamment par addition de zinc (Zn).

**11.** Procédé suivant l'une des revendications 1 à 9, **caractérisé en ce que** l'on ménage les conditions d'électrolyse (ELYS) réductrices par réduction cathodique électrochimique à l'aide d'un dispositif d'électrolyse.

**12.** Procédé suivant l'une des revendications 1 à 11, **caractérisé en ce que** l'on envoie la solution ($HNO_3$) aqueuse à une cuve (15) de réaction à laquelle on envoie à partir d'un dispositif (22) de remplissage l'agent (R) réducteur azoté sous forme solide ou sous forme dissoute.

**13.** Procédé suivant l'une des revendications 1 à 11, **caractérisé en ce que** l'on introduit l'agent (R) réducteur azoté en excès dans la solution ($HNO_3$) aqueuse.

**14.** Procédé suivant la revendication 12, **caractérisé en ce que** l'on emplit le dispositif (22) de remplissage à des intervalles de temps réguliers ou prescrits de l'agent (R) réducteur.

**15.** Dispositif d'élimination d'oxydes d'azote ($NO_x$) de

gaz d'échappement (A), comprenant

a) un pot catalytique (2) d'oxydation auquel on peut envoyer les gaz d'échappement (A),
b) un dispositif (4) de mélange en aval, notamment un laveur à gaz, dans lequel les gaz d'échappement (A) peuvent être mis en contact avec de l'eau ($H_2O$) et de l'oxygène ($O_2$),
c) une cuve (15) de réaction et
d) un conduit (12) de mise en communication, par lequel une solution ($HNO_3$) aqueuse se formant dans le dispositif (4) de mélange peut être envoyée à la cuve (15) de réaction, à laquelle peuvent être envoyés un milieu (M) aqueux acide et un agent (R) réducteur azoté et qui peut être mise

d1) dans des conditions (Me, Zn) réductrices ou
d2) dans des conditions d'électrolyse (ELYS) réductrices.

**16.** Dispositif suivant la revendication 15, **caractérisé en ce que** le pot catalytique (2) d'oxydation comprend du platine sur un substrat en oxyde d'aluminium ($Al_2O_3$) ou en oxyde de titane ($TiO_2$).

**17.** Dispositif suivant la revendication 15 ou 16, **caractérisé en ce que** le dispositif (4) de mélange est relié à un réservoir (6) d'eau et à une source (10) d'oxygène.

**18.** Dispositif suivant la revendication 15, 16 ou 17, **caractérisé en ce que** le dispositif (4) de mélange comprend un conduit (14) d'évacuation des gaz d'échappement (A') épurés.

**19.** Dispositif suivant l'une des revendications 15 à 18, **caractérisé en ce que** la cuve (15) de réaction communique avec un réservoir (16) d'acide, par exemple avec un accumulateur de véhicule automobile présent de toutes façons.

**20.** Dispositif suivant l'une des revendications 15 à 19, **caractérisé en ce que** la cuve (15) de réaction communique avec un dispositif (22) de remplissage en l'agent (R) réducteur azoté sous forme solide ou sous forme dissoute, notamment en urée ($(NH_2)_2CO$).

**21.** Dispositif suivant l'une des revendications 19 ou 20, **caractérisé en ce que** l'on peut se rendre maître de ce qui sort du réservoir (16) en acide en fonction d'un capteur (20) de pH qui est prévu pour mesurer le pH de la solution (P) de réaction dans la cuve (15) de réaction.